# EUROPEAN PATENT SPECIFICATION

(11) **EP 4 400 891 B1**
(45) Date of publication and mention of the grant of the patent: **11.11.2026**
(21) Application number: 24178578.1
(22) Date of filing: 25.01.2019
(51) Int. Cl.: G02B 5/00, G02B 7/182, G02B 13/00, G03B 9/06

(54) **OPTICAL SYSTEM**
OPTISCHES SYSTEM
SYSTÈME OPTIQUE

(30) Priority: 25.01.2018 US 201862621967 P; 02.02.2018 US 201862625600 P; 08.06.2018 US 201862682671 P; 22.06.2018 US 201862688694 P; 25.07.2018 US 201862703147 P; 27.07.2018 US 201862711036 P; 31.10.2018 US 201862753716 P; 13.11.2018 US 201862760320 P; 14.12.2018 US 201862780077 P; 20.12.2018 US 201862782664 P; 27.12.2018 US 201862785593 P
(43) Date of publication of application: 17.07.2024
(62) Document number(s) of the earlier application(s) in accordance with Art. 76 EPC: 19153713.3 / 3 518 016
(73) Proprietor: Actutek Corporation, Taoyuan City 320016 (TW)
(72) Inventor: FAN, Chen-Hsien, 326 Taoyuan City (TW); HU, Chao-Chang, 326 Taoyuan City (TW); TSAI, Sung-Mao, 326 Taoyuan City (TW); H0, Liang-Ting, 326 Taoyuan City (TW); WENG, Chih-Wei, 326 Taoyuan City (TW); YU, Shiang-Ming, 326 Taoyuan City (TW); TSAI, Kuen-Wang, 326 Taoyuan City (TW); SONG, Sin-Jhong, 326 Taoyuan City (TW)
(74) Representative: Hoefer & Partner Patentanwälte mbB

(56) References cited:
- JP-A- 2005 037 866
- KR-A- 20070 008 758
- KR-A- 20140 146 919
- US-A1- 2006 244 859
- US-A1- 2006 245 752
- US-A1- 2008 304 126
- US-A1- 2009 034 046
- US-A1- 2011 122 311

## Description

### CROSS REFERENCE TO RELATED APPLICATIONS

The present application is a Divisional of Application No. 19153713.3, filed January 25, 2019, which claims priority to U.S. Provisional Patent Application No. 62/621,967, filed on January 25, 2018, No. 62/625,600, filed on February 2, 2018, No. 62/682,671, filed on June 8, 2018, No. 62/688,694, filed on June 22, 2018, No. 62/703,147, filed on July 25, 2018, No. 62/711,036, filed on July 27, 2018, No. 62/753,716, filed on October 31, 2018, No. 62/760,320, filed on November 13, 2018, No. 62/780,077, filed on December 14, 2018, No. 62/782,664, filed on December 20, 2018, No. 62/785,593, filed on December 27, 2018.

### BACKGROUND OF THE INVENTION

### Field of the Invention

The application relates in general to an optical system, and in particular, to an optical system having a fixing component. In particular, the present invention relates to an aperture unit. Aperture units are shown in each of documents US 2006/244859 A1, KR 2014 0146919 A, JP 2005 037866 A, US 2006/245752 A1, and US 2008/304126 A1. KR 2007 0008758 A, US 2009/034046 A1, and US 2011/122311 A1 show further aperture units.

### Description of the Related Art

Thanks to technological advancements, the latest consumer electronic devices (such as tablet computers and smartphones) now usually include a lens module capable of aiding in photography or recording video. These electronic devices have become commonplace, and have been developed to be more convenient and thin. More and more choices are available for users to choose from. However, when a lens with long focal length is disposed in the electronic device, the thickness of the electronic device is increased, and as such it is hard to make the electronic device thin.

### BRIEF SUMMARY OF INVENTION

The Invention is defined in independent claim 1. The dependent claims define preferred embodiments thereof.

### BRIEF DESCRIPTION OF DRAWINGS

The invention can be more fully understood by reading the subsequent detailed description and examples with references made to the accompanying drawings, wherein:
FIG. 1 is a perspective view of an aperture unit according to some embodiments of the present disclosure.
FIG. 2 is an exploded view of the aperture unit in FIG. 1.
FIG. 3 is a cross sectional view illustrated along the line 10-A-10-A' of FIG. 1.
FIG. 4A is a schematic view of the top plate in FIG. 1.
FIG. 4B is a schematic view of the bottom in FIG. 1.
FIG. 4C is a schematic view of the bottom plate in FIG. 1.
FIG. 4D is a schematic view of the first blade in FIG. 1.
FIG. 4E is a schematic view of the second blade in FIG. 1.
FIG. 4F is a schematic view of the guiding element in FIG. 1.
FIG. 4G is a schematic view of the guiding element in FIG. 1.
FIG. 4H is a schematic view of some elements in FIG. 1.
FIG. 5A is a schematic view of some elements in FIG. 1 under one condition.
FIG. 5B is a schematic view of some elements in FIG. 1 under one condition.
FIG. 6A is a schematic view of some elements in FIG. 1 under another condition.
FIG. 6B is a schematic view of some elements in FIG. 1 under another condition.
FIG. 7A is a schematic view of some elements in FIG. 1 under another condition.
FIG. 7B is a schematic view of some elements in FIG. 1 under another condition.

### DETAILED DESCRIPTION OF INVENTION

The making and using of the embodiments of the optical system are discussed in detail below. It should be appreciated, however, that the embodiments provide many applicable inventive concepts that can be embodied in a wide variety of specific contexts. The specific embodiments discussed are merely illustrative of specific ways to make and use the embodiments, and do not limit the scope of the disclosure.

Unless defined otherwise, all technical and scientific terms used herein have the same meaning as commonly understood by one of ordinary skill in the art to which this disclosure belongs. It should be appreciated that each term, which is defined in a commonly used dictionary, should be interpreted as having a meaning conforming to the relative skills and the background or the context of the present disclosure, and should not be interpreted in an idealized or overly formal manner unless defined otherwise.

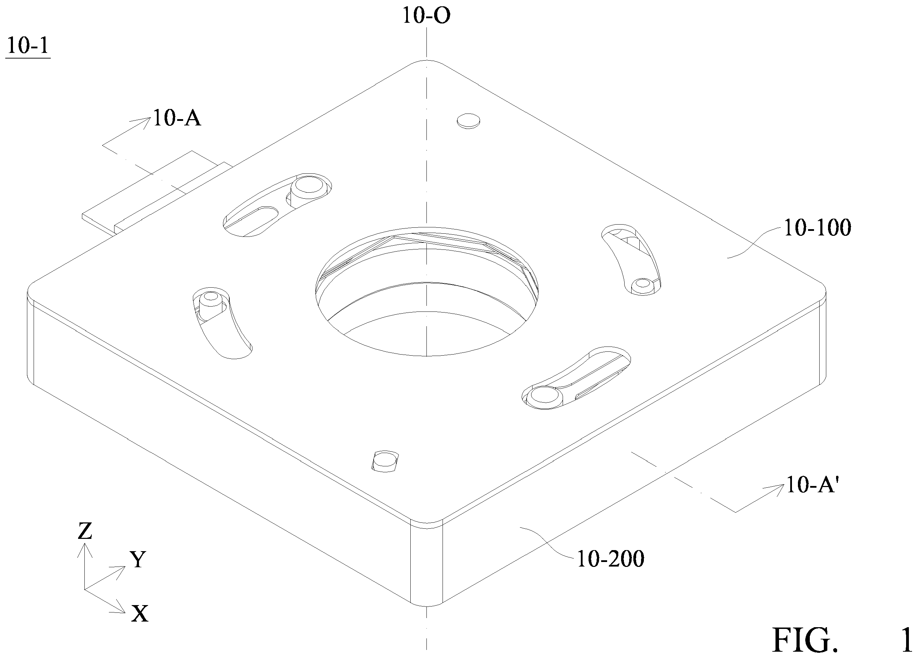

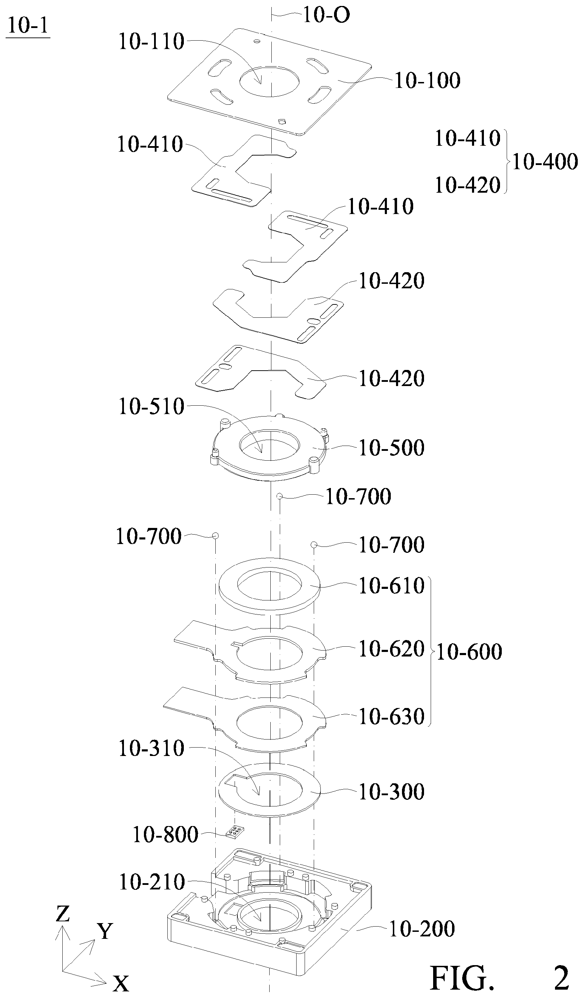

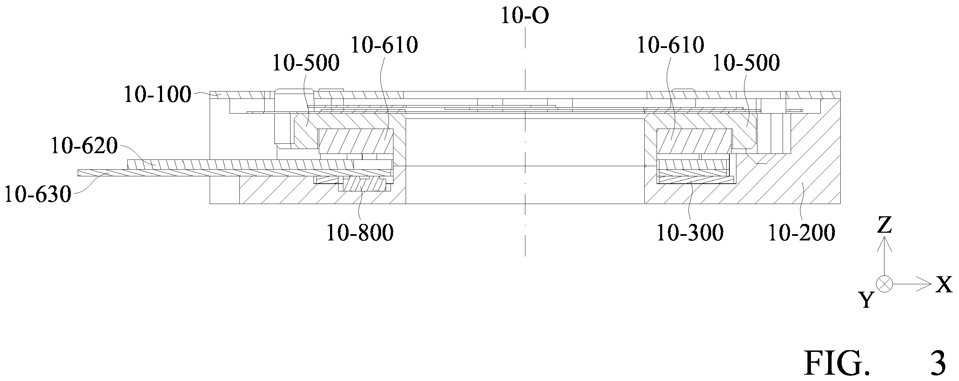

Firstly, referring to FIGs. 1, 2 and 3, which are a perspective view, an exploded view and a cross sectional view illustrated along a line 10-A-10-A' in FIG. 1 of an aperture unit 10-1, according to some embodiments of the present disclosure. The aperture unit 10-1 mainly includes a top plate 10-100, a bottom 10-200, a bottom plate 10-300 and other elements disposed between the top plate 10-100, the bottom 10-200 and the bottom plate 10-300. For example, in FIG. 2, an aperture 10-400 (includes two first blades 10-410 and two second blades 10-420), a guiding element 10-500, a driving assembly 10-600 (includes a magnetic element 10-610, a driving substrate 10-620 and a circuit board 10-630), sliding elements 10-700 and a sensor 10-800 are disposed between the top plate 10-100, the bottom 10-200 and the bottom plate 10-300.

The top plate 10-100, the bottom 10-200 and the bottom plate 10-300 may be combined with each other to form a case of the aperture unit 10-1. It should be noted that a top plate opening 10-110, a bottom opening 10-210 and a bottom plate opening 10-310 are formed on the top plate 10-100, the bottom 10-200 and the bottom plate 10-300, respectively. The centers of the top plate opening 10-110, the bottom opening 10-210 and the bottom plate opening 10-310 correspond to an optical axis 10-O of the aperture unit 10-1. In some embodiments, the top plate 10-100, the bottom 10-200 and the bottom plate 10-300 may be made of nonconductive materials (e.g. plastic), so the short circuit or electrical interference between the aperture unit 10-1 and other electronic elements around may be prevented. In some embodiments, the top plate 10-100, the bottom 10-200 and the bottom plate 10-300 may be made of metal to enhance the mechanical strength of the top plate 10-100, the bottom 10-200 and the bottom plate 10-300.

The aperture 10-400, the guiding element 10-500 and the driving assembly 10-600 may be disposed between the top plate 10-100 and the bottom 10-200 in order. In other words, the driving assembly 10-600 is disposed between the guiding element 10-500 and the bottom 10-200. In the aperture 10-400, the two first blades 10-410 are arranged in a first direction (the X or Y direction), the two second blades 10-420 are arranged in a second direction (the Y or X direction), and the first direction and the second direction are different, such as perpendicular to each other. Furthermore, the two first blades 10-410 are positioned on different XY planes, and the two second blades 10-420 are also positioned on different XY planes. As a result, the first blades 10-410 and the second blades 10-420 are allowed to partially overlap along the optical axis, and the friction between the blades may be reduced.

In some embodiments, the portions that do not move, such as the top plate 10-100, the bottom 10-200 and the bottom plate 10-300, may be defined as fixed portions, and the portions that may move relative to the fixed portions may be defined as movable portions, such as the guiding element 10-500, etc. The sliding elements 10-700, such as balls, may be disposed between the guiding element 10-500 and the bottom 10-200 (fixed portion) to allow the guiding element 10-500 (movable portion) sliding relative to the bottom 10-200 (fixed portion).

The sensor 10-800 may be used to detect the positions of the elements in the aperture unit 10-1. The sensor 10-800 may be suitable position sensors such as Hall, MR (Magneto Resistance), GMR (Giant Magneto Resistance), or TMR (Tunneling Magneto Resistance) sensors. Furthermore, an initial position limiting assembly (not shown) such as a spring or a magnetic element maybe disposed in the aperture unit 10-1, when the driving assembly 10-600 does not drive the guiding element 10-500, the guiding element 10-500 may be positioned at a predetermined position relative to the fixed portion by the initial position limiting assembly.

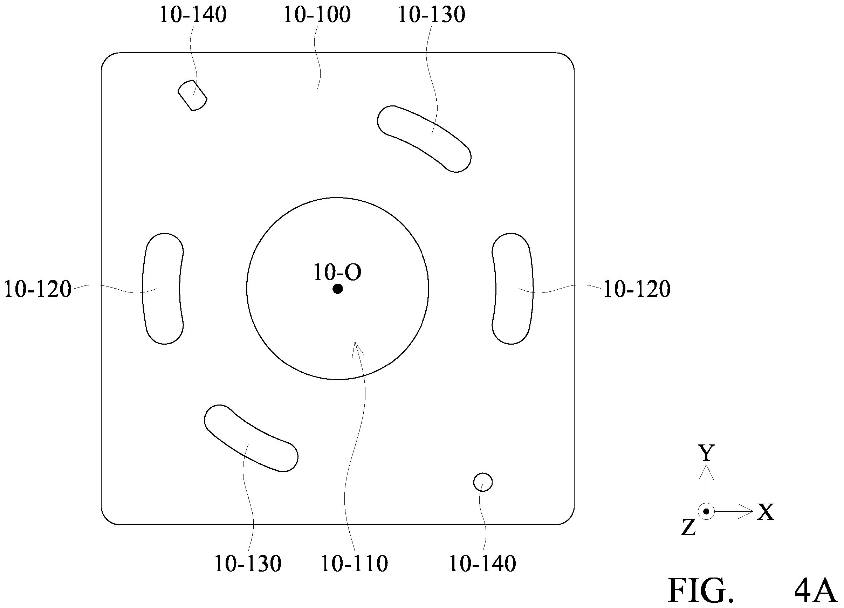

FIG. 4A is a top view of the top plate 10-100. The top plate 10-100 includes a top plate opening 10-110, and two first top plate recesses 10-120 and two second top plate recesses 10-130 surrounding the top plate opening 10-110. Furthermore, two positioning holes 10-140 are formed on the top plate 10-100. In some embodiments, the two first top plate recesses 10-120 may be symmetric relative to the optical axis 10-O, and the two second top plate recesses 10-130 may also be symmetric relative to the optical axis 10-O, but the present disclosure is not limited thereto. Furthermore, in some embodiments, the width of the first top plate recess 10-120 is different than the width of the second top plate recess 10-130. Accordingly, elements disposed in the first top plate recess 10-120 and the second top plate recess 10-130 may have different sizes to increase design flexibility.

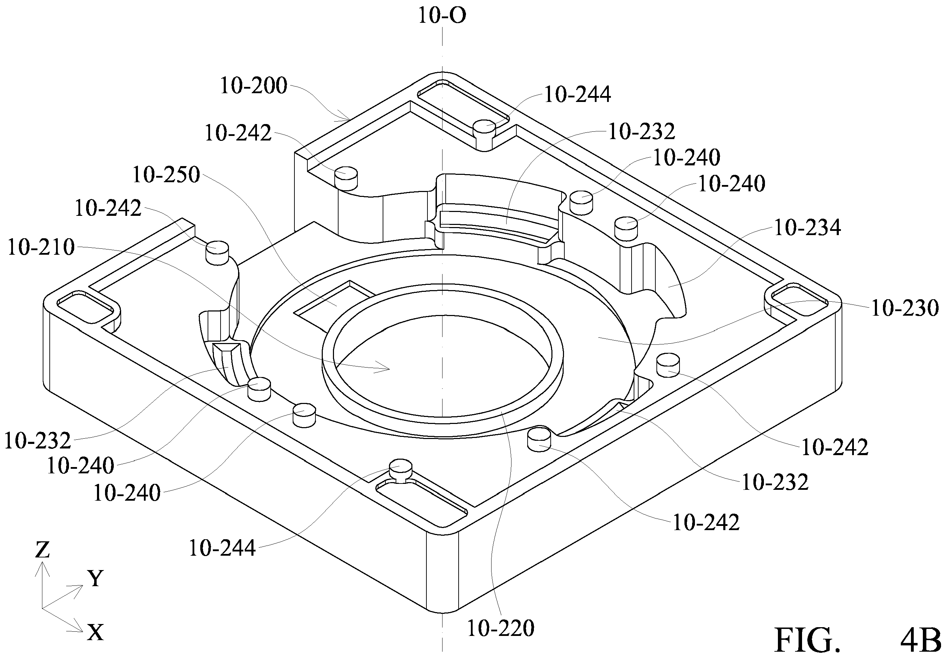

FIG. 4B is a schematic view of the bottom 10-200. The bottom 10-200 includes a bottom opening 10-210, a protective structure 10-220 and a recess 10-230 surrounding the bottom opening 10-210, a plurality of guiding recesses 10-232, a positioning recess 10-234, a plurality of protrusions 10-240, protrusions 10-242 and positioning columns 10-244 and a concave portion 10-250 in the recess 10-230.

The bottom opening 10-210 is surrounded by the protective structure 10-220, and the protective structure 10-220 extends along the optical axis 10-O. Accordingly, dust from external may be prevented from entering the aperture unit 10-1, or fragment that may be created during the operation of the aperture unit 10-1 may be prevented from falling out from the aperture unit 10-1 to affect other elements (such as other elements in an image capturing device). The bottom opening 10-210 and the protective structure 10-220 are surrounded by the recess 10-230. Other elements, such as the driving assembly 10-600, may be disposed in the recess 10-230 to fix the position of the elements and protect these elements. A plurality of guiding recesses 10-232 and a positioning recess 10-234 may be formed on the bottom 10-200, wherein the guiding recesses 10-232 may be arranged in a rotational symmetric way relative to the optical axis 10-O, and the positioning recess 10-234 may be disposed between two guiding recesses 10-232.

Furthermore, a plurality of protrusions 10-240, protrusions 10-242 and positioning columns 10-244 extended along the optical axis 10-O (or toward the first blade 10-410) are formed on the bottom 10-200. The positions of the positioning columns 10-244 correspond to the positioning holes 10-140 of the top plate 10-100 (FIG. 4A) along the optical axis 10-O to allow the relative position between the top plate 10-100 and the bottom 10-200 being fixed.

In this embodiment, the protrusions 10-240, the protrusions 10-242 and the positioning columns 10-244 may be arranged symmetrically relative to the optical axis 10-O to balance the stress in the aperture unit 10-1. However, the present disclosure is not limited thereto. For example, the positions of the protrusions 10-240, the protrusions 10-242 and the positioning columns 10-244 may be changed. In some embodiments, the sensor 10-800 may be disposed in the concave portion 10-250 to fix the position of the sensor 10-800, but the present disclosure is not limited thereto. For example, the sensor 10-800 may be disposed at other suitable positions to meet desired requirements.

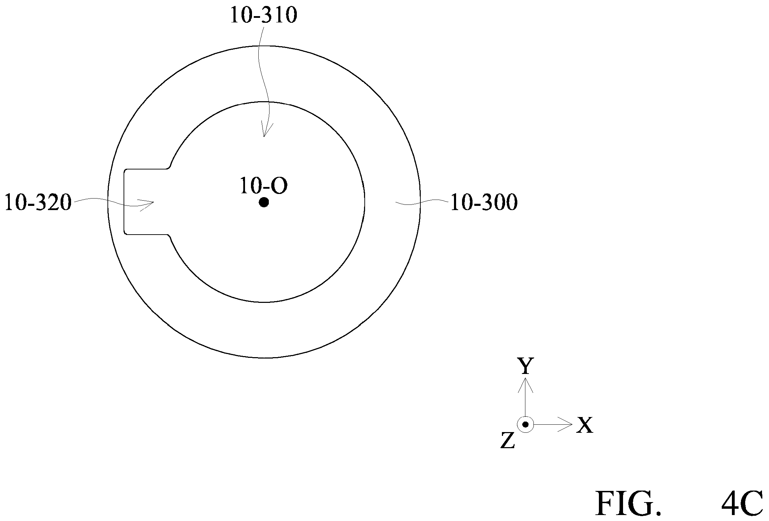

FIG. 4C is a schematic view of the bottom plate 10-300. A bottom plate opening 10-310 is formed in the bottom plate 10-300, a concave structure 10-320 is formed on one side of the bottom plate opening 10-310 and corresponds to the concave portion 10-250 of the bottom 10-200 in FIG. 4B. Therefore, the sensor 10-800 is allowed to be disposed in the concave structure 10-320.

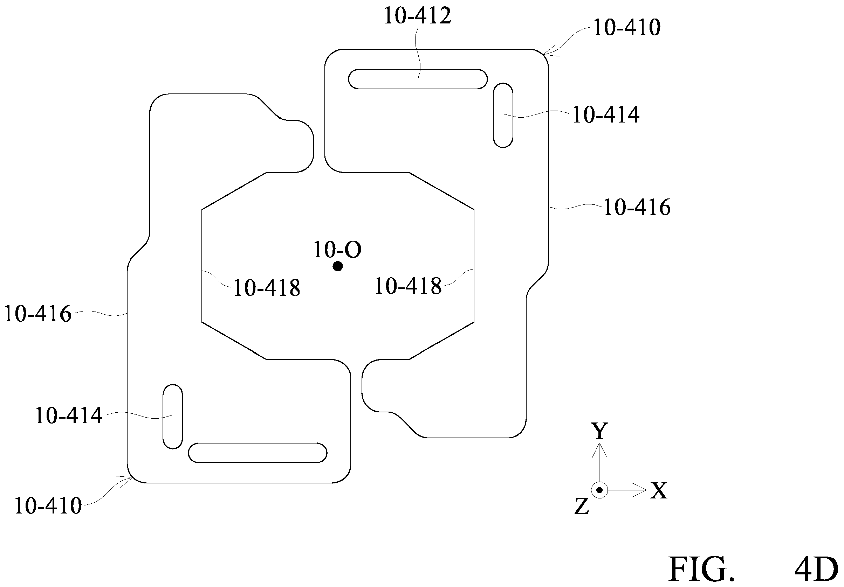

FIG. 4D is a top view of two first blades 10-410. The first blades 10-410 have a shape like a plate. The first blade 10-410 includes a first trench 10-412 extended substantially in the X direction and a second trench 10-414 extended substantially to the Y direction. In other words, the first trench 10-412 and the second trench 10-414 extend in different directions. In some embodiments, the length of the first trench 10-412 is different than the second trench 10-414. For example, the length of the first trench 10-412 may be greater than the second trench 10-414. In other embodiments, the length of the first trench 10-412 may be less than the second trench 10-414.

Furthermore, the first blade 10-410 further includes an outer edge 10-416 and a first window edge 10-418. In this embodiment, the outer edge 10-416 faces away from the optical axis 10-O, and the first window edge 10-418 faces toward the optical axis 10-O. In other words, the distance between the outer edge 10-416 and the optical axis 10-O is greater than the distance between the first window edge 10-418 and the optical axis 10-O. Furthermore, the outer edge 10-416 does not have right angle. Because the outer edge 10-416 may contact other elements, if the outer edge 10-416 does not have right angle, the chance of damage caused by the outer edge 10-416 contacting with other elements may be reduced.

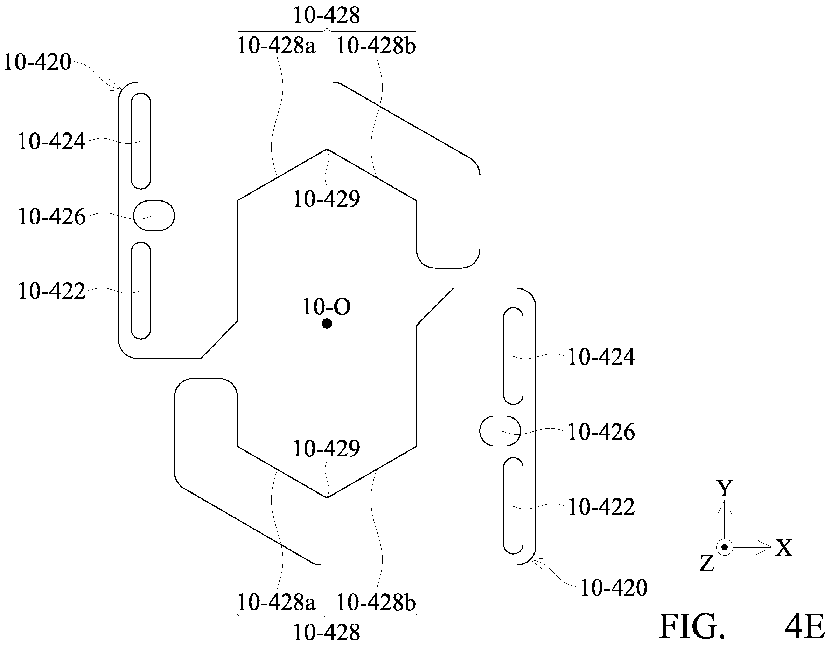

Two second blades 10-420 are illustrated in FIG. 4E and have a shape like a plate. The second blade 10-420 includes a third trench 10-422 and a fourth trench 10-424 substantially extended in the same direction, such as extended in the Y direction, and a hole 10-426 is formed between the third trench 10-422 and the fourth trench 10-424. A V-shaped second window edge 10-428 (including an edge 10-428a and an edge 10-428b) is formed on one side of the second blade 10-420 facing the optical axis 10-O. In other words, the edge 10-428a and the edge 10-428b extend in different directions. Furthermore, the intersection of the edge 10-428a and the edge 10-428b is called an intersection 10-429.

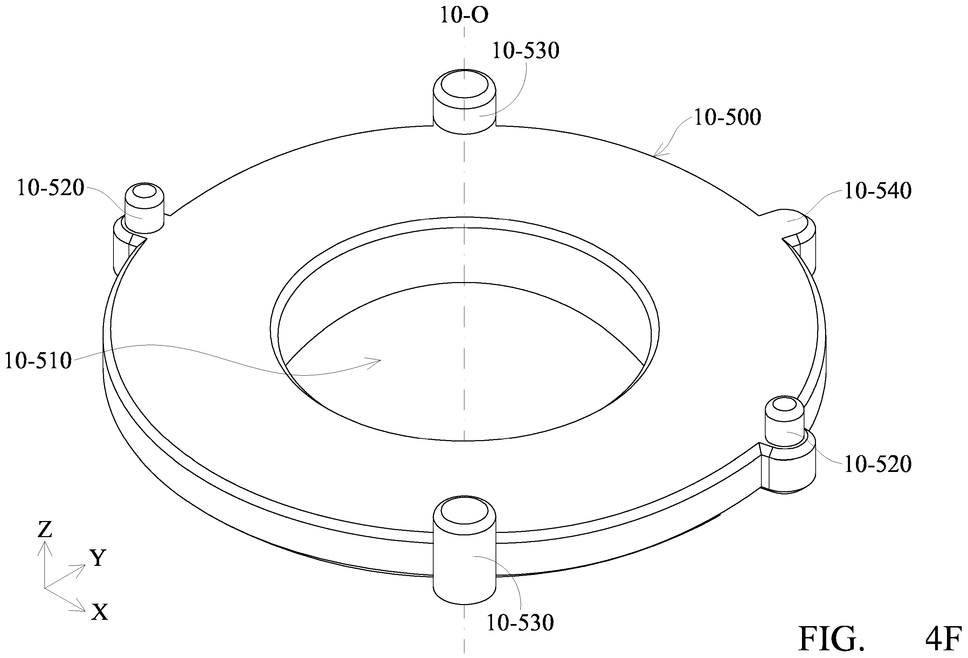

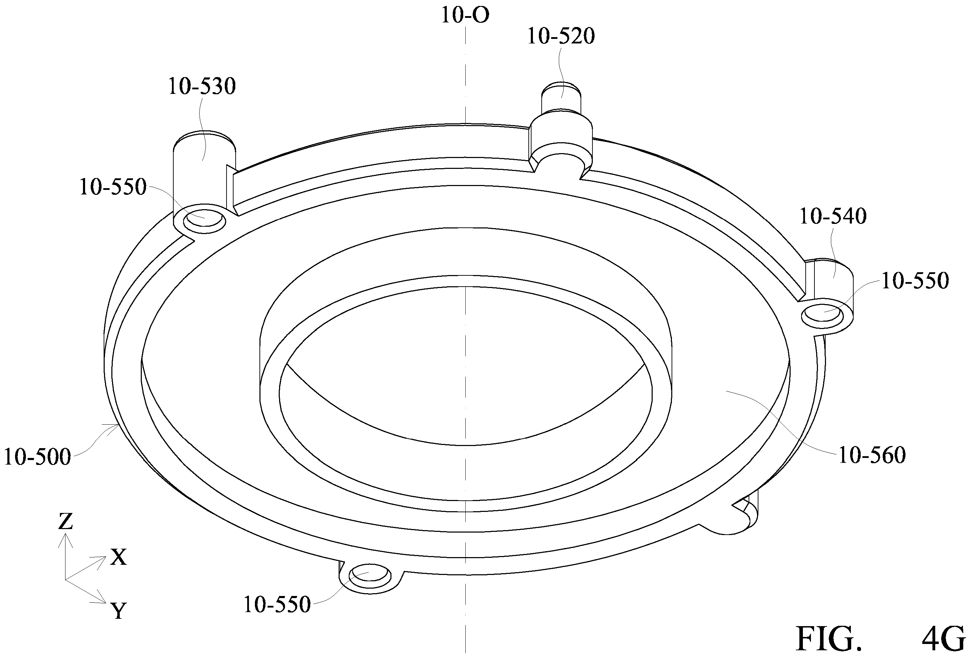

FIGs. 4F and 4G are schematic views of the guiding element 10-500 viewed from different directions. A guiding element opening 10-510 is formed in the guiding element 10-500. Two first columns 10-520, two second columns 10-530 and a positioning portion 10-540 are formed at the outer side (the side faces opposite to the optical axis 10-O) of the guiding element 10-500. The first columns 10-520 and the second columns 10-530 positioned on one side of the guiding element 10-500 that extends toward the first blade 10-410 (the Z direction) along the optical axis 10-O, and concave portions 10-550 and a recess 10-560 are formed on another side of the guiding element 10-500 (the -Z direction, please refer to FIG. 4G). In some embodiments, the concave portions 10-550 may be positioned under the second columns 10-530 and the positioning portion 10-540, and may have a shape corresponding to the sliding elements 10-700, but the present disclosure is not limited thereto. For example, in some embodiments, the concave portions may be formed under the first columns 10-520. The guiding element opening 10-510 is surrounded by the recess 10-560, and the recess 10-560 may have a shape corresponded to the magnetic element 10-610 to allow the magnetic element 10-610 being disposed in the recess 10-560. As a result, the position of the magnetic element 10-610 may be fixed by, for example, adhering, and the magnetic element 10-610 may be allowed to move together with the guiding element 10-500.

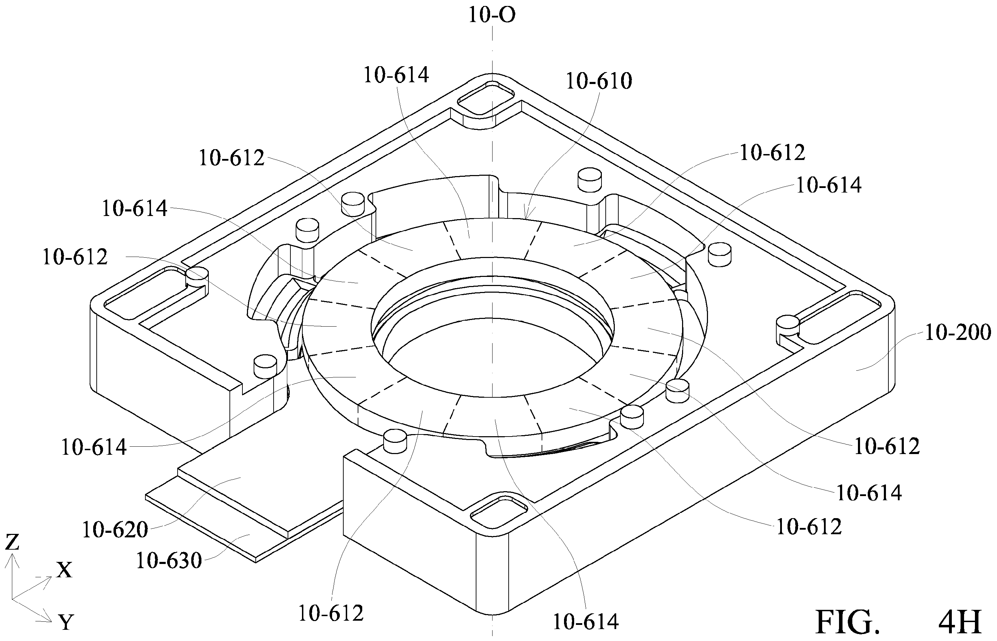

FIG. 4H is a schematic view of the bottom 10-200 and the driving assembly 10-600 (includes the magnetic element 10-610, the driving substrate 10-620 and the circuit board 10-630). In FIG. 4H, the circuit board 10-630 is disposed in the recess 10-230 of the bottom 10-200 (FIG. 4B), the driving substrate 10-620 is disposed on the circuit board 10-630, and the magnetic element 10-610 is disposed on the driving substrate 10-620. The circuit board 10-630 may be, for example, a flexible printing circuit (FPC), and may be affixed on the bottom 10-200 by adhering to be electrically connected to other elements outside the aperture unit 10-1 and may provide electrical signal to other elements of the aperture unit 10-1.

The magnetic element 10-610 is a magnet and has a plurality of first magnetic poles 10-612 and second magnetic poles 10-614 arranged in turn and surrounding the optical axis 10-O, as shown by the dashed lines in FIG. 4H. The driving substrate 10-620 may include a coil corresponding to the magnetic element 10-610, such as a flat plate coil. Accordingly, an electromagnetic driving force may be created by the interaction between the magnetic element 10-610 and the driving substrate 10-620 to move the magnetic element 10-610 in clockwise or counterclockwise directions relative to the optical axis 10-O (i.e. first moving dimension).

The magnetic element 10-610 is disposed and fixed in the recess 10-560 of the guiding element 10-500 (FIG. 4G), so the magnetic element 10-610 may drive the guiding element 10-500 to rotate together in clockwise or counterclockwise direction (i.e. the first moving dimension). Furthermore, the sensor 10-800 is disposed in the concave portion 10-250 of the bottom 10-200, and the driving substrate 10-620 is disposed on the sensor 10-800, so the minimum distance between the driving substrate 10-620 and the guiding element 10-500 may be less than the minimum distance between the sensor 10-800 and the guiding element 10-500, and the driving substrate 10-620 may protect the sensor 10-800 disposed under the driving substrate 10-620 by prevent the sensor 10-800 colliding with other elements. Furthermore, the driving assembly 10-600 is disposed in the recess 10-230 of the bottom 10-200, and the protective structure 10-220 is extended along the Z direction from the recess 10-230, so at least a portion of the protective structure 10-220 of the bottom 10-200 may overlap the driving assembly 10-600 when viewed in a direction that is perpendicular to the optical axis 10-O.

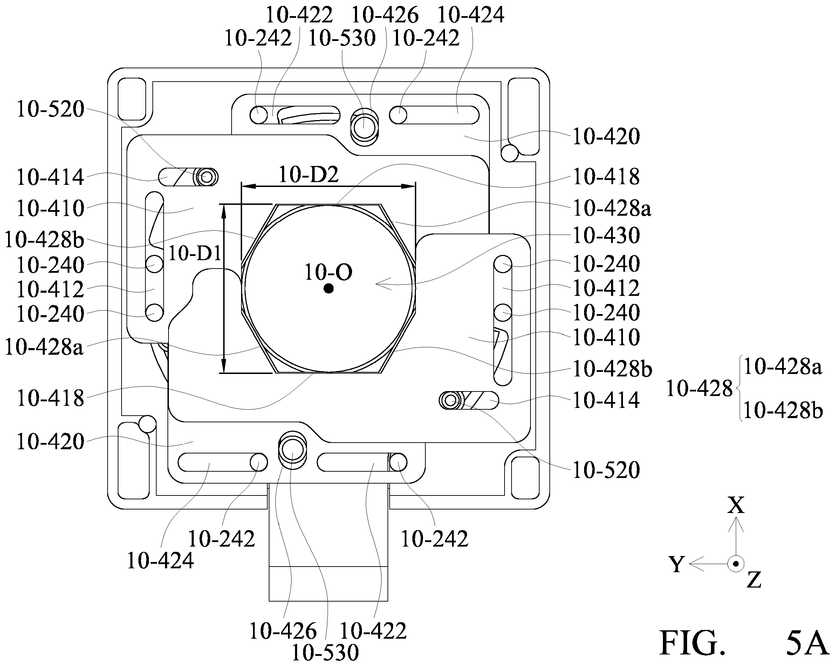

FIG. 5A is a schematic view of some elements of the aperture unit 10-1 under one condition. It should be noted that the protrusions 10-240 of the bottom 10-200 are disposed in the first trenches 10-412 of the first blades 10-410, and the protrusions 10-242 of the bottom 10-200 are disposed in the third trenches 10-422 and the fourth trenches 10-424 of the second blades 10-420. The first columns 10-520 of the guiding element 10-500 are disposed in the second trenches 10-414 of the first blades 10-410, and the second columns 10-530 of the guiding element 10-500 are disposed in the holes 10-426 of the second blades 10-420. In other words, the first blades 10-410 and the second blades 10-420 contact and are slidably connected to the bottom 10-200 (the fixed portion) and the guiding element 10-500 by different portions. Furthermore, the first blades 10-410 and the second blades 10-420 are positioned on different planes. For example, the distance between the first blades 10-410 and the circuit board 10-630 is greater than the distance between the second blades 10-420 and the circuit board 10-630.

It should be noted than in FIG. 5A, the first trench 10-412 of the first blade 10-410 extends in the X direction, and the second trench 10-414 of the first blade 10-410, the third trench 10-422 and the fourth trench 10-424 of the second blade 10-420 extend in the Y direction. At the same time, the first window edge 10-418 of the first blade 10-410 and the second window edge 10-428 of the second blade 10-420 form a window 10-430, and the size of the window 10-430 in the X direction is distance 10-D1 (the distance between the two first window edges 10-418), and the size of the window 10-430 in the Y direction is distance 10-D2. Furthermore, at least a portion of the first blade 10-410 overlaps the second blade 10-420 when viewed along the optical axis 10-O. For example, the first blade 10-410 may overlap the second blade 10-420 by the outer edge 10-416 in FIG. 4D. Accordingly, it can be ensured that the first blade 10-410 and the second blade 10-420 form the window 10-430.

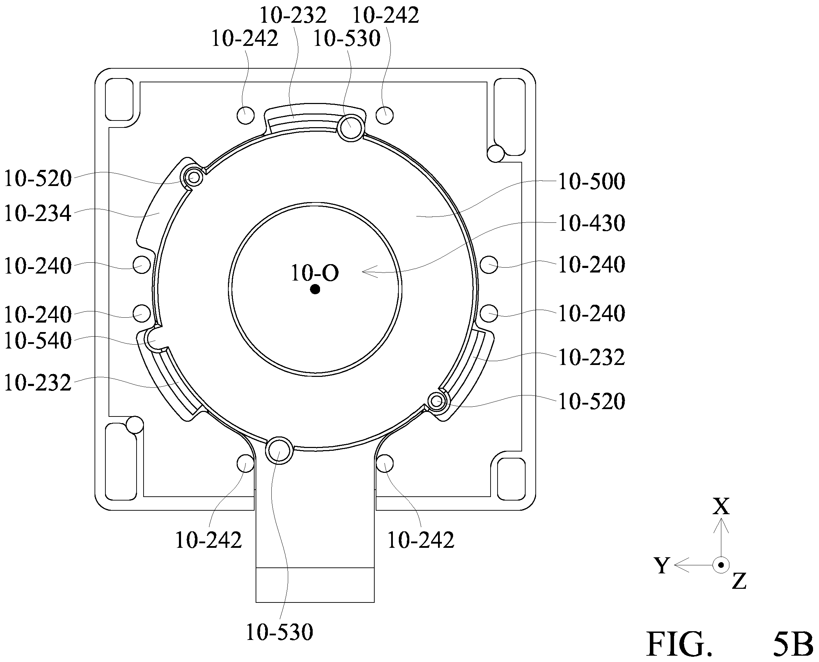

FIG. 5B is a schematic view of the bottom 10-200, the guiding element 10-500 and the driving assembly 10-600 (includes the magnetic element 10-610, the driving substrate 10-620 and the circuit board 10-630) under the condition illustrated in FIG. 5A. The first columns 10-520, the second columns 10-530 and the positioning portion 10-540 are positioned in the guiding recesses 10-232 or the positioning recess 10-234 of the bottom 10-200. It should be noted that the sliding elements 10-700 (FIG. 2) are positioned between the bottom 10-200 and the first columns 10-520, the second columns 10-530 and the positioning position 10-540 to allow the guiding element 10-500 sliding relative to the bottom 10-200. The sliding element 10-700 is disposed in the concave portion 10-550 of the guiding element 10-500, so the relative positions between the guiding element 10-500 and the sliding element 10-700 may be fixed when the guiding element 10-500 is rotated, and the sliding element 10-700 slidably contacts the bottom 10-200 (fixed portion). Furthermore, the first column 10-520, the second column 10-530 and the positioning portion 10-540 are positioned at one side of the guiding recess 10-232 or the positioning recess 10-234, so the rotation direction of the guiding element 10-500 may be limited. For example, under the condition illustrated in FIG. 5B, the guiding element 10-500 cannot be rotated in the clockwise direction.

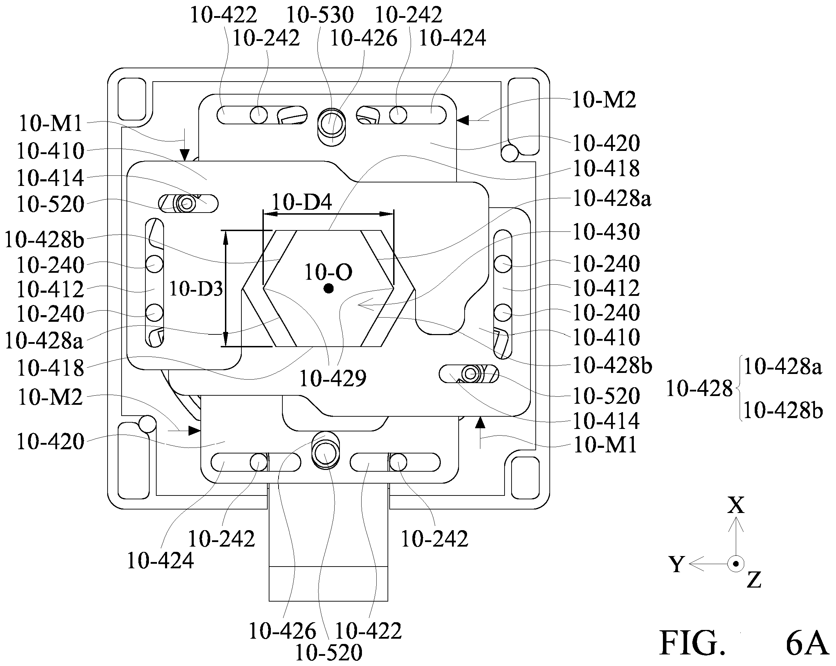

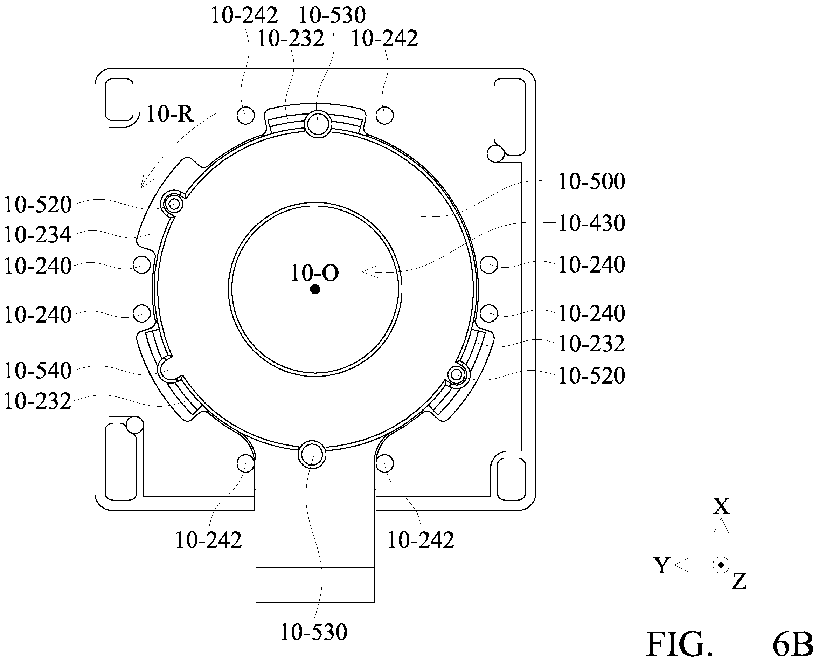

FIGs. 6A and 6B are schematic views of some elements of the aperture unit 10-1 under another condition, wherein an electromagnetic driving force created between the coil in the driving substrate 10-620 and the magnetic element 10-610 drives the guiding element 10-500 to be rotated, as shown by the rotation direction 10-R in FIG. 6B.

As a result, referring to FIG. 6A, the first blade 10-410 and the second blade 10-420 may be moved together due to the rotation of the guiding element 10-500. For example, in FIG. 6A, when the first column 10-520 of the guiding element 10-500 is rotated, the second trench 10-414 of the first blade 10-410 may be pushed, and the protrusions 10-240 on the bottom 10-200 and the first trench 10-212 of the first blade 10-410 may limit the moving direction of the first blade 10-410. The two protrusions 10-240 on the bottom 10-200 are arranged in the X direction, so the two first blades 10-410 may move in the X direction (second moving dimension) relative to the bottom 10-200 (fixed portion) and becoming closer to each other, as shown by the moving direction 10-M1. It should be noted that the second moving dimension (the lateral movement in the X direction) is different than the first moving dimension (the rotational movement relative to the optical axis 10-O).

Furthermore, the protrusions 10-240 are arranged in a direction that is parallel to the second moving dimension, and the first trench 10-412 extends in a direction that is parallel to the second moving dimension. In other words, the distance between the two first window edges 10-418 of the two first blades 10-410 is 10-D3 under this condition, the distance between the two first window edges 10-418 of the two first blades 10-410 is 10-D1 under the aforementioned condition, and the distance 10-D3 is less than the distance 10-D1.

Similarly, the holes 10-426 of the second blades 10-420 may be pushed by the second columns 10-530 of the guiding element 10-500 when the guiding element 10-500 is rotating, and the rotation direction may be limited by the protrusions 10-242 of the bottom 10-200 and the third trenches 10-422 and the fourth trenches 10-424 of the second blades 10-420. For example, the two protrusions 10-242 of the bottom 10-200 may be arranged in the Y direction, so the two second blades 10-420 may move in the Y direction (the third moving dimension) relative to the bottom 10-200 (fixed portion) and become closer to each other, as shown by the moving direction 10-M2. The third moving dimension (translational movement in the Y direction) is different than the first moving dimension (rotational movement relative to the optical axis 10-O) and the second moving dimension (translational movement in the X direction). In other words, the distance between two intersections 10-429 of the second window edges 10-428 of two second blades 10-420 is 10-D4, and the distance 10-D4 is less than the distance 10-D2 between the two second window edges 10-428 of the two second blades 10-420 illustrated in the aforementioned condition.

It should be noted that the moving distances of the first blades 10-410 and the second blades 10-420 in FIGs. 6A and 6B are different to the condition illustrated in FIGs. 5A and 5B. In other words, the distance 10-D1 minus the distance 10-D3 is different than the distance 10-D2 minus the distance 10-D4. In some embodiments, the distance 10-D1 minus the distance 10-D3 is less than the distance 10-D2 minus the distance 10-D4, i.e. (10-D1)-(10-D3)<(10-D2)-(10-D4).

The window 10-430 formed by the first window edge 10-418 and the second window edge 10-428 has a hexagonal shape, and the distance between two opposite vertexes of a hexagon is different to two opposite edges of the hexagon. In other words, if it is desired to let the window 10-430 under different conditions being similar hexagons, the first blade 10-410 and the second blade 10-420 have to move different distances. If the hexagons are similar, this will improve the uniformity of the light that passes through different sizes of windows..

It should be noted that a portion of the aperture unit 10-1 forms a first moving connecting portion, such as the first trench 10-412 of the first blade 10-410 and the protrusion 10-240 of the bottom 10-200, or the third trench 10-422 of the second blade 10-420 and the protrusion 10-242 of the bottom 10-200, etc., but the present disclosure does not limited thereto. Another portion of the aperture unit 10-1 forms a second moving connecting portion, such as the second trench 10-414 of the first blade 10-410 and the first column 10-520 of the guiding element 10-500, or the hole 10-426 of the second blade 10-420 and the second column 10-520 of the guiding element 10-500, but the present disclosure is not limited thereto. The first blade 10-410 or the second blade 10-420 contacts to and is movably connected to the bottom 10-200 (the fixed portion) in the first moving connecting portion, and the first blade 10-410 or the second blade 10-420 contacts and is slidably connected to the guiding element 10-500 in the second moving connecting portion.

In some embodiments, another portion of the aperture unit 10-1 forms another first moving connecting portion, such as the fourth trench 10-424 of the second blade 10-420 and the protrusion 10-242 of the bottom 10-200. Under this condition, the second blade 10-420 contacts and is slidably connected to the bottom 10-200 (the fixed portion) in another first moving connecting portion, and the second moving connecting portion is disposed between the two first moving connecting portions.

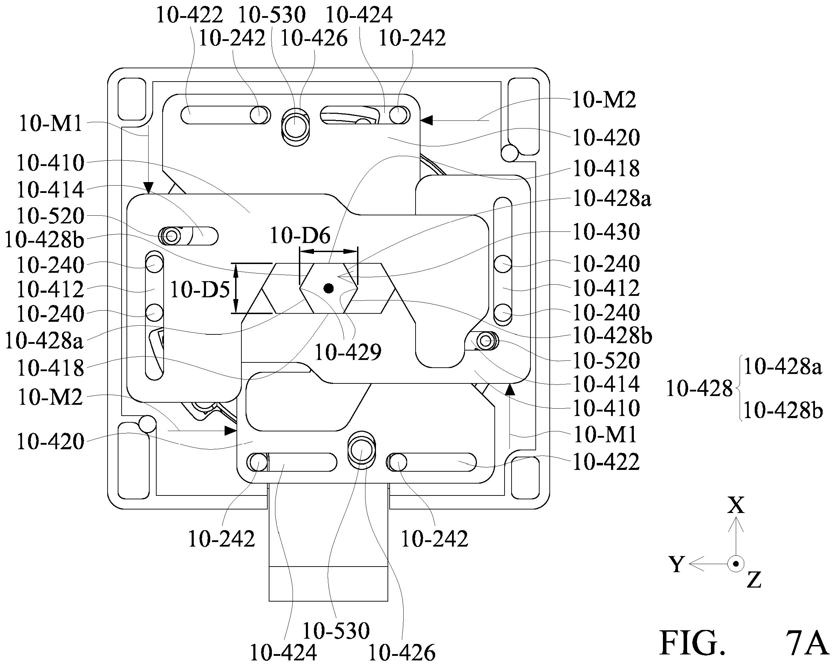

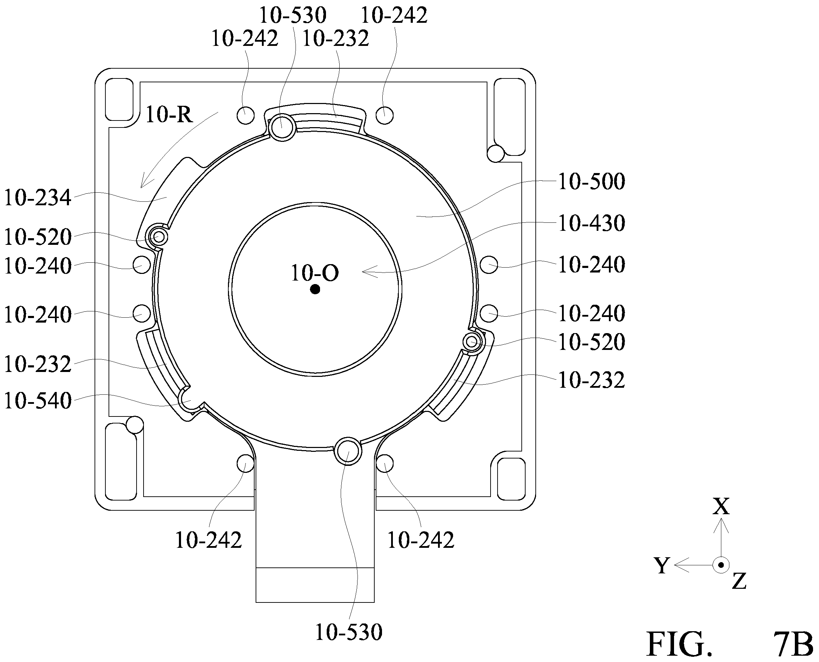

Figs 7A and 7B are schematic view of some elements of the aperture unit 10-1 under another condition. Under this condition, the electromagnetic force created between the coil in the driving substrate 10-620 and the magnetic element 10-610 may drive the guiding element 10-500 to rotate further than the aforementioned condition, as shown by the rotation direction 10-R in FIG. 7B.

As a result, the two first blades 10-410 and the two second blades 10-420 may become closer to each other, and the size of the window 10-430 may be further decreased. Referring to FIG. 7A, the distance between two first window edges 10-418 of the two first blades 10-410 is 10-D5, and the distance 10-D5 is less than the distance 10-D3 between the two first window edges 10-418 of the two first blades 10-410 under the aforementioned condition. Furthermore, the distance between the two intersections 10-429 of the second window edges 10-428 of the two second blades 10-420 is 10-D6, and the distance 10-D6 is less than the distance 10-D4 between the second window edges 10-428 of the two second blades 10-420.

Similarly, the moving distances of the first blade 10-410 and the second blade 10-420 in FIGs. 7A and 7B are different to the condition illustrated in FIGs. 6A and 6B. In other words, the distance 10-D3 minus the distance 10-D5 is different than the distance 10-D4 minus the distance 10-D6. In some embodiments, the distance 10-D3 minus the distance 10-D5 is less than the distance 10-D4 minus the distance 10-D6, i.e. (10-D3)-(10-D5)<(10-D4)-(10-D6).

Accordingly, the first blade 10-410 may move in the second moving dimension (translational movement in the X direction) within a first range (i.e. the size of the window 10-430 in the X direction may be changed between 10-D1 and 10-D5), the second blade 10-420 may move in the third moving dimension (translational movement in the Y direction) within a second range (i.e. the size of the window 10-430 in the Y direction may be changed between 10-D2 and 10-D6), and the first range is different than the second range (i.e. 10-D1 minus 10-D5 is different than 10-D2 minus 10-D6). It should be noted that in the first range and the second range, at least a portion of the first blade 10-410 overlaps the second blade 10-420 to form the window 10-430.

If it is desired to enlarge the size of the window 10-430 of the aperture unit 10-1, an electromagnetic force having an opposite direction to the aforementioned embodiments should be applied to the guiding element 10-500 for rotating the guiding element 10-500 to a direction opposite to the rotation direction 10-R, and the first blade 10-410 and the second blade 10-420 may move in a direction opposite to the aforementioned embodiments to enlarge the size of the window 10-430.

Accordingly, the window 10-430 (equivalent aperture) of the aperture unit 10-1 may change continuously within the range to allow the aperture unit 10-1 having different aperture sizes to meet different image capturing requirements. In general, when the size of the equivalent aperture is enlarged, the incident light flux may also be increased, so this kind of aperture may be applied in an environment having low brightness. Furthermore, the influence of background noise may be decreased to avoid image noise. Moreover, the sharpness of the image received may be increased if the size of the equivalent aperture is decreased in a high-brightness environment, and overexposure may also be prevented.

Although the first moving dimension is rotational movement, and the second moving dimension and the third moving dimension are translational movements in different directions, the present disclosure is not limited thereto. As long as the first moving dimension, the second moving dimension and the third movement dimension are different, the desired result of the present disclosure may be achieved. Furthermore, the aperture unit 10-1 may be fixed to other external elements through the guiding element 10-500 and the fixed portion (such as the bottom 10-200) to move together with other external elements. As a result, no additional driving element should be provided, and miniaturization may be achieved.

The aperture unit 10-1 may be disposed in image capturing devices that require apertures. For example, the aperture unit 10-1 may be disposed in a periscope image capturing device to meet the thickness requirement of mobile electronic devices. Furthermore, the aperture unit 10-1 may be applied in the optical modules 1-A1000, 1-A2000, 1-A3000, 1-B2000, 1-C2000, 1-D2000 and 12-2000 in some embodiments of the present disclosure.

In summary, an aperture unit that can continuously control the size of the aperture opening is provided in the present disclosure. Accordingly, different user requirements of image capturing may be fulfilled. Furthermore, the aperture unit may be disposed on the movable portion and no additional driving element is required to drive the aperture unit, so that miniaturization may be achieved.

The embodiments in present disclosure have at least one of the advantages or effects that the optical driving mechanism has better focus function and optical compensation, and can protect the biasing assembly, to greatly reduce the damage or breakage caused by the collision during the movement. In some embodiments, the optical driving mechanism further includes a resin assembly and a vibration-damping assembly disposed on and in direct contact with the biasing element to provide a vibration-damping effect, thereby improving the quality of the driving mechanism.

Although some embodiments of the present disclosure and their advantages have been described in detail, it should be understood that various changes, substitutions and alterations can be made herein without departing from the scope of the disclosure as defined by the appended claims.

## Claims

1. An aperture unit (10-1) having an optical axis (10-O), comprising:
a fixed portion with a top plate (10-100), a bottom (10-200), a bottom plate (10-300);
further comprising, disposed between the top plate (10-100) and the bottom (10-200):
an aperture (10-400) including two first blades (10-410) and two second blades (10-420),
a guiding element (10-500) with a guiding element opening (10-510),
a driving assembly (10-600) including a magnetic element (10-610), a driving substrate (10-620) with a coil, and a circuit board (10-630),
sliding elements (10-700), wherein:
the sliding elements (10-700) are disposed between the guiding element (10-500) and the bottom (10-200) to allow the guiding element (10-500) to slide relative to the bottom (10-200),
the first blades (10-410) and the second blades (10-420) contact and are slidably connected to the bottom (10-200) and the guiding element (10-500) by different portions,
the magnet element (10-610) has a plurality of first magnetic poles (10-612) and second magnetic poles (10-614) arranged in turn and surrounding the optical axis (10-O),
an electromagnetic driving force created between the coil in the driving substrate (10-620) and the magnetic element (10-610) drives the guiding element (10-500) to be rotated such that the first blades (10-410) and the second blades (10-420) are moved together due to the rotation of the guiding element (10-500),
in the aperture (10-400), the two first blades (10-410) are arranged in a first direction, the two second blades (10-420) are arranged in a second direction, and the first direction and the second direction are different,
the two first blades (10-410) are positioned on different planes, and the two second blades (10-420) are also positioned on different planes, such that the first blades (10-410) and the second blades (10-420) are allowed to partially overlap along the optical axis (10-O),
the first blades (10-410) further include a first window edge (10-418) facing the optical axis (10-O),
the second blades (10-420) further include each a V-shaped second window edge (10-428) formed on one side of the second blade (10-420) facing the optical axis (10-O),
the first window edges (10-418) of the first blades (10-410) and the second window edges (10-428) of the second blades (10-420) form a window (10-430),
the window (10-430) formed by the first window edges (10-418) and the second window edges (10-428) has a hexagonal shape.

2. The aperture unit (10-1) as claimed in claim 1, wherein the fixed portion (10-200) comprises a protrusion (10-240) extending toward the first blades (10-410), and the guiding element (10-500) comprises a column (10-520, 10-530) that extends toward the first blades (10-410).

3. The aperture unit (10-1) as claimed in claim 2, wherein the guiding element (10-500) is movable relative to the fixed portion (10-200) in a first moving dimension, the first blades (10-410) are movable relative to the fixed portion (10-200) in a second moving dimension, and the first moving dimension and the second moving dimension are different, wherein each of the first blades (10-410) comprises a first trench (10-412) that extends in a direction that is parallel to the second moving dimension.

4. The aperture unit (10-1) as claimed in claim 3, wherein the fixed portion (10-200) further comprises another protrusion (10-240) that extends toward the first blades (10-410), and the protrusions (10-240) are arranged in a direction that is parallel to the second moving dimension.

5. The aperture unit (10-1) as claimed in claim 3, wherein each of the first blades (10-410) further comprises a second trench (10-414) that extends in a different direction than the first trench (10-412).

6. The aperture unit (10-1) as claimed in claim 3, wherein when the guiding element (10-500) moves relative to the fixed portion (10-200) in the first moving dimension, the second blades (10-420) move relative to the fixed portion (10-200) in a third moving dimension, wherein the first moving dimension, the second moving dimension and the third moving dimension are different.

7. The aperture unit (10-1) as claimed in claim 6, wherein each of the first blades (10-410) is movable in the second moving dimension within a first range, each of the second blades (10-420) is movable in the third moving dimension within a second range, and the first range and the second range are different.

8. The aperture unit (10-1) as claimed in claim 1, wherein the first blades (10-410) and the second blades (10-420) have a shape like a plate, the first blades (10-410) and the second blades (10-420) are positioned on different planes, and at least a portion of the first blades (10-410) overlaps the second blades (10-420) when viewed along the direction that is parallel to the optical axis (10-O).

9. The aperture unit (10-1) as claimed in claim 8, wherein each of the first blades (10-410) comprises an outer edge (10-416), and at least a portion of the outer edge (10-416) overlaps the second blades (10-420) when viewed along the direction that is parallel to the optical axis (10-O).

10. The aperture unit (10-1) as claimed in claim 1, further comprising a sensor (10-800) disposed on the fixed portion (10-200), wherein the driving assembly (10-600) further comprises a driving substrate (10-620) disposed in the fixed portion (10-200), and a minimum distance between the driving substrate (10-620) and the guiding element (10-500) is less than a minimum distance between the sensor (10-800) and the guiding element (10-500).

11. The aperture unit (10-1) as claimed in claim 1, wherein the bottom comprises a bottom opening (10-210) and a protective structure (10-220), the optical axis (10-O) passes through the bottom opening (10-210), and the protective structure (10-220) surrounds the bottom opening (10-210) and extends along the optical axis (10-O), wherein at least a portion of the protective structure (10-220) overlaps the driving assembly (10-600) when viewed in a direction that is perpendicular to the optical axis (10-O).

12. The aperture unit (10-1) as claimed in claim 1, wherein the relative position between the sliding element (10-700) and the guiding element (10-500) is fixed, and the sliding element (10-700) directly and movably contacts the fixed portion (10-200).

## Patentansprüche

1. Apertureinheit (10-1) mit einer optischen Achse (10-O), umfassend:
einen festen Abschnitt mit einer oberen Platte (10-100), einem Boden (10-200), einer Bodenplatte (10-300);
ferner umfassend, angeordnet zwischen der oberen Platte (10-100) und dem Boden (10-200):
eine Apertur (10-400) mit zwei ersten Lamellen (10-410) und zwei zweiten Lamellen (10-420),
ein Führungselement (10-500) mit einer Führungselementöffnung (10-510),
eine Antriebsanordnung (10-600) mit einem magnetischen Element (10-610), einem Antriebssubstrat (10-620) mit einer Spule und einer Leiterplatte (10-630),
Gleitelemente (10-700), wobei:
die Gleitelemente (10-700) zwischen dem Führungselement (10-500) und dem Boden (10-200) angeordnet sind, um dem Führungselement (10-500) zu ermöglichen, relativ zu dem Boden (10-200) zu gleiten,
die ersten Lamellen (10-410) und die zweiten Lamellen (10-420) mit dem Boden (10-200) und dem Führungselement (10-500) durch verschiedene Abschnitte in Kontakt stehen und verschiebbar damit verbunden sind,
das Magnetelement (10-610) eine Vielzahl von ersten Magnetpolen (10-612) und zweiten Magnetpolen (10-614) aufweist, die abwechselnd angeordnet sind und die optische Achse (10-O) umgeben,
eine elektromagnetische Antriebskraft, die zwischen der Spule in dem Antriebssubstrat (10-620) und dem magnetischen Element (10-610) erzeugt wird, das Führungselement (10-500) antreibt, so dass es gedreht wird, so dass die ersten Lamellen (10-410) und die zweiten Lamellen (10-420) aufgrund der Drehung des Führungselements (10-500) zusammen bewegt werden,
in der Apertur (10-400) die zwei ersten Lamellen (10-410) in einer ersten Richtung angeordnet sind, die zwei zweiten Lamellen (10-420) in einer zweiten Richtung angeordnet sind und die erste Richtung und die zweite Richtung verschieden sind,
die zwei ersten Lamellen (10-410) auf verschiedenen Ebenen positioniert sind und die zwei zweiten Lamellen (10-420) auch auf verschiedenen Ebenen positioniert sind, so dass es den ersten Lamellen (10-410) und den zweiten Lamellen (10-420) ermöglicht wird, sich entlang der optischen Achse (10-O) teilweise zu überlappen,
die ersten Lamellen (10-410) ferner eine erste Fensterkante (10-418) aufweisen, die der optischen Achse (10-O) zugewandt ist,
die zweiten Lamellen (10-420) ferner jeweils eine V-förmige zweite Fensterkante (10-428) aufweisen, die auf einer Seite der zweiten Lamelle (10-420) ausgebildet ist, die der optischen Achse (10-O) zugewandt ist,
die ersten Fensterkanten (10-418) der ersten Lamellen (10-410) und die zweiten Fensterkanten (10-428) der zweiten Lamellen (10-420) ein Fenster (10-430) bilden,
das Fenster (10-430), das durch die ersten Fensterkanten (10-418) und die zweiten Fensterkanten (10-428) gebildet wird, eine sechseckige Form aufweist.

2. Apertureinheit (10-1) nach Anspruch 1, wobei der feste Abschnitt (10-200) einen Vorsprung (10-240) umfasst, der sich in Richtung der ersten Lamellen (10-410) erstreckt, und das Führungselement (10-500) eine Säule (10-520, 10-530) umfasst, die sich in Richtung der ersten Lamellen (10-410) erstreckt.

3. Apertureinheit (10-1) nach Anspruch 2, wobei das Führungselement (10-500) relativ zu dem festen Abschnitt (10-200) in einer ersten Bewegungsdimension beweglich ist, die ersten Lamellen (10-410) relativ zu dem festen Abschnitt (10-200) in einer zweiten Bewegungsdimension beweglich sind und die erste Bewegungsdimension und die zweite Bewegungsdimension unterschiedlich sind, wobei jede der ersten Lamellen (10-410) einen ersten Schlitz (10-412) umfasst, der sich in einer Richtung erstreckt, die parallel zu der zweiten Bewegungsdimension ist.

4. Apertureinheit (10-1) nach Anspruch 3, wobei der feste Abschnitt (10-200) ferner einen weiteren Vorsprung (10-240) umfasst, der sich in Richtung der ersten Lamellen (10-410) erstreckt, und die Vorsprünge (10-240) in einer Richtung angeordnet sind, die parallel zu der zweiten Bewegungsdimension ist.

5. Apertureinheit (10-1) nach Anspruch 3, wobei jede der ersten Lamellen (10-410) ferner einen zweiten Schlitz (10-414) umfasst, der sich in einer anderen Richtung als der erste Schlitz (10-412) erstreckt.

6. Apertureinheit (10-1) nach Anspruch 3, wobei, wenn sich das Führungselement (10-500) relativ zu dem festen Abschnitt (10-200) in der ersten Bewegungsdimension bewegt, sich die zweiten Lamellen (10-420) relativ zu dem festen Abschnitt (10-200) in einer dritten Bewegungsdimension bewegen, wobei die erste Bewegungsdimension, die zweite Bewegungsdimension und die dritte Bewegungsdimension unterschiedlich sind.

7. Apertureinheit (10-1) nach Anspruch 6, wobei jede der ersten Lamellen (10-410) in der zweiten Bewegungsdimension innerhalb eines ersten Bereichs beweglich ist, jede der zweiten Lamellen (10-420) in der dritten Bewegungsdimension innerhalb eines zweiten Bereichs beweglich ist und der erste Bereich und der zweite Bereich unterschiedlich sind.

8. Apertureinheit (10-1) nach Anspruch 1, wobei die ersten Lamellen (10-410) und die zweiten Lamellen (10-420) eine plattenartige Form aufweisen, die ersten Lamellen (10-410) und die zweiten Lamellen (10-420) auf verschiedenen Ebenen positioniert sind und mindestens ein Abschnitt der ersten Lamellen (10-410) die zweiten Lamellen (10-420) überlappt, wenn entlang der Richtung betrachtet wird, die parallel zu der optischen Achse (10-O) ist.

9. Apertureinheit (10-1) nach Anspruch 8, wobei jede der ersten Lamellen (10-410) eine Außenkante (10-416) umfasst und mindestens ein Abschnitt der Außenkante (10-416) die zweiten Lamellen (10-420) überlappt, wenn entlang der Richtung betrachtet wird, die parallel zu der optischen Achse (10-O) ist.

10. Apertureinheit (10-1) nach Anspruch 1, ferner umfassend einen Sensor (10-800), der auf dem festen Abschnitt (10-200) angeordnet ist, wobei die Antriebsanordnung (10-600) ferner ein Antriebssubstrat (10-620) umfasst, das in dem festen Abschnitt (10-200) angeordnet ist, und ein Mindestabstand zwischen dem Antriebssubstrat (10-620) und dem Führungselement (10-500) kleiner als ein Mindestabstand zwischen dem Sensor (10-800) und dem Führungselement (10-500) ist.

11. Apertureinheit (10-1) nach Anspruch 1, wobei der Boden eine Bodenöffnung (10-210) und eine Schutzstruktur (10-220) umfasst, die optische Achse (10-O) durch die Bodenöffnung (10-210) verläuft und die Schutzstruktur (10-220) die Bodenöffnung (10-210) umgibt und sich entlang der optischen Achse (10-O) erstreckt, wobei mindestens ein Abschnitt der Schutzstruktur (10-220) die Antriebsanordnung (10-600) überlappt, wenn in einer Richtung betrachtet wird, die senkrecht zu der optischen Achse (10-O) ist.

12. Apertureinheit (10-1) nach Anspruch 1, wobei die relative Position zwischen dem Gleitelement (10-700) und dem Führungselement (10-500) fest ist und das Gleitelement (10-700) direkt und beweglich mit dem festen Abschnitt (10-200) in Kontakt steht.

## Revendications

1. Unité d'ouverture (10-1) ayant un axe optique (10-O), comprenant :
une partie fixe avec une plaque supérieure (10-100), un fond (10-200), une plaque inférieure (10-300) ;
comprenant en outre, disposée entre la plaque supérieure (10-100) et le fond (10-200) :
une ouverture (10-400) comprenant deux premières lames (10-410) et deux secondes lames (10-420),
un élément de guidage (10-500) avec une ouverture d'élément de guidage (10-510),
un ensemble d'entraînement (10-600) comprenant un élément magnétique (10-610), un substrat d'entraînement (10-620) avec une bobine, et une carte de circuit imprimé (10-630),
des éléments coulissants (10-700), dans lequel :
les éléments coulissants (10-700) sont disposés entre l'élément de guidage (10-500) et le fond (10-200) pour permettre à l'élément de guidage (10-500) de coulisser par rapport au fond (10-200),
les premières lames (10-410) et les secondes lames (10-420) sont en contact et sont reliées de manière coulissante au fond (10-200) et à l'élément de guidage (10-500) par différentes parties,
l'élément magnétique (10-610) a une pluralité de premiers pôles magnétiques (10-612) et de seconds pôles magnétiques (10-614) agencés tour à tour et entourant l'axe optique (10-O),
une force d'entraînement électromagnétique créée entre la bobine dans le substrat d'entraînement (10-620) et l'élément magnétique (10-610) entraîne l'élément de guidage (10-500) à tourner de sorte que les premières lames (10-410) et les secondes lames (10-420) sont déplacées ensemble en raison de la rotation de l'élément de guidage (10-500),
dans l'ouverture (10-400), les deux premières lames (10-410) sont agencées dans une première direction, les deux secondes lames (10-420) sont agencées dans une seconde direction, et la première direction et la seconde direction sont différentes,
les deux premières lames (10-410) sont positionnées sur différents plans, et les deux secondes lames (10-420) sont également positionnées sur différents plans, de sorte que les premières lames (10-410) et les secondes lames (10-420) peuvent se chevaucher partiellement le long de l'axe optique (10-O),
les premières lames (10-410) comprennent en outre un premier bord de fenêtre (10-418) faisant face à l'axe optique (10-O),
les secondes lames (10-420) comprennent en outre chacune un second bord de fenêtre en forme de V (10-428) formé sur un côté de la seconde lame (10-420) faisant face à l'axe optique (10-O),
les premiers bords de fenêtre (10-418) des premières lames (10-410) et les seconds bords de fenêtre (10-428) des secondes lames (10-420) forment une fenêtre (10-430),
la fenêtre (10-430) formée par les premiers bords de fenêtre (10-418) et les seconds bords de fenêtre (10-428) a une forme hexagonale.

2. Unité d'ouverture (10-1) selon la revendication 1, dans laquelle la partie fixe (10-200) comprend une saillie (10-240) s'étendant vers les premières lames (10-410), et l'élément de guidage (10-500) comprend une colonne (10-520, 10-530) qui s'étend vers les premières lames (10-410).

3. Unité d'ouverture (10-1) selon la revendication 2, dans laquelle l'élément de guidage (10-500) est mobile par rapport à la partie fixe (10-200) dans une première dimension mobile, les premières lames (10-410) sont mobiles par rapport à la partie fixe (10-200) dans une seconde dimension mobile, et la première dimension mobile et la seconde dimension mobile sont différentes, dans laquelle chacune des premières lames (10-410) comprend une première fente (10-412) qui s'étend dans une direction qui est parallèle à la seconde dimension mobile.

4. Unité d'ouverture (10-1) selon la revendication 3, dans laquelle la partie fixe (10-200) comprend en outre une autre saillie (10-240) qui s'étend vers les premières lames (10-410), et les saillies (10-240) sont agencées dans une direction qui est parallèle à la seconde dimension mobile.

5. Unité d'ouverture (10-1) selon la revendication 3, dans laquelle chacune des premières lames (10-410) comprend en outre une seconde fente (10-414) qui s'étend dans une direction différente de la première fente (10-412).

6. Unité d'ouverture (10-1) selon la revendication 3, dans laquelle lorsque l'élément de guidage (10-500) se déplace par rapport à la partie fixe (10-200) dans la première dimension mobile, les secondes lames (10-420) se déplacent par rapport à la partie fixe (10-200) dans une troisième dimension mobile, dans laquelle la première dimension mobile, la deuxième dimension mobile et la troisième dimension mobile sont différentes.

7. Unité d'ouverture (10-1) selon la revendication 6, dans laquelle chacune des premières lames (10-410) est mobile dans la deuxième dimension mobile dans une première plage, chacune des secondes lames (10-420) est mobile dans la troisième dimension mobile dans une seconde plage, et la première plage et la seconde plage sont différentes.

8. Unité d'ouverture (10-1) selon la revendication 1, dans laquelle les premières lames (10-410) et les secondes lames (10-420) ont une forme de plaque, les premières lames (10-410) et les secondes lames (10-420) sont positionnées sur différents plans, et au moins une partie des premières lames (10-410) chevauche les secondes lames (10-420) lorsqu'elles sont vues le long de la direction qui est parallèle à l'axe optique (10-O).

9. Unité d'ouverture (10-1) selon la revendication 8, dans laquelle chacune des premières lames (10-410) comprend un bord externe (10-416), et au moins une partie du bord externe (10-416) chevauche les secondes lames (10-420) lorsqu'elles sont vues le long de la direction qui est parallèle à l'axe optique (10-O).

10. Unité d'ouverture (10-1) selon la revendication 1, comprenant en outre un capteur (10-800) disposé sur la partie fixe (10-200), dans laquelle l'ensemble d'entraînement (10-600) comprend en outre un substrat d'entraînement (10-620) disposé dans la partie fixe (10-200), et une distance minimale entre le substrat d'entraînement (10-620) et l'élément de guidage (10-500) est inférieure à une distance minimale entre le capteur (10-800) et l'élément de guidage (10-500).

11. Unité d'ouverture (10-1) selon la revendication 1, dans laquelle le fond comprend une ouverture de fond (10-210) et une structure de protection (10-220), l'axe optique (10-O) passe à travers l'ouverture de fond (10-210), et la structure de protection (10-220) entoure l'ouverture de fond (10-210) et s'étend le long de l'axe optique (10-O), dans laquelle au moins une partie de la structure de protection (10-220) chevauche l'ensemble d'entraînement (10-600) lorsqu'elle est vue dans une direction qui est perpendiculaire à l'axe optique (10-O).

12. Unité d'ouverture (10-1) selon la revendication 1, dans laquelle la position relative entre l'élément coulissant (10-700) et l'élément de guidage (10-500) est fixe, et l'élément coulissant (10-700) est en contact directement et de manière mobile avec la partie fixe (10-200).
